(19) Europäisches Patentamt / European Patent Office / Office européen des brevets

(11) **EP 3 929 835 A1**

(12) # EUROPEAN PATENT APPLICATION

(43) Date of publication:
**29.12.2021 Bulletin 2021/52**

(51) Int Cl.:
**G06Q 10/06** *(2012.01)*  **G06Q 50/30** *(2012.01)*

(21) Application number: **21152858.3**

(22) Date of filing: **22.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2020  IN 202021026748**

(71) Applicant: **Tata Consultancy Services Limited Maharashtra (IN)**

(72) Inventors:
- **Suriyanarayanan, Ramasubramanian**
  **600113 Chennai, Tamil Nadu (IN)**
- **VASAN, Arunchandar**
  **600113 Chennai, Tamil Nadu (IN)**
- **BISWAS, Animesh**
  **600097 Chennai, Tamil Nadu (IN)**
- **GUDLA, Sreedhar**
  **600097 Chennai, Tamil Nadu (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **SYSTEM AND METHOD FOR MINIMIZING PASSENGER MISCONNECTS IN AIRLINE OPERATIONS**

(57) This disclosure relates to a system and method for computing and recommending optimal hold time for every flight of an airline to minimize passenger misconnects in airline operations. The method recommends an optimal hold time for a flight based on passenger and airline disutility. Passenger disutility is computed based on the delay to destination of some or all of the passengers, availability of alternate routes for the connecting passengers, and a passenger specific connection time for connecting passengers. Airline disutility is computed based on the arrival delay of the outbound flight and subsequent flights of the same physical aircraft, till the delay no-longer propagates and an operating cost to the airline such as rebooking cost, ground cost etc. Finally, the method introduces a business factor, bringing in airline specific flexibility, to combine passenger and airline disutility to form total disutility and recommends the optimal hold based on least value.

FIG. 3

**Description**

PRIORITY

The present application claims priority from Indian patent application No. 202021026748, filed on Jun 24, 2020. The entire content of the abovementioned application is incorporated herein by reference.

TECHNICAL FIELD

The disclosure herein generally relates to a field of airline operations and, more particularly, a system and method for minimizing passenger misconnects in airline operations.

BACKGROUND OF THE INVENTION

In airline operations, passenger misconnection is a key concern of airlines. A passenger can miss a connecting flight due to several reasons, but the most common reason is due to a delayed incoming flight. If some passengers on the delayed incoming flight were to have a tight connection (Time between arrival and departure is very limited), there is a high chance that they may miss the connection and so the airline may have to rebook them. This is an undesirable state for both the airline and the misconnecting passengers. While the passenger mostly has a time-based disutility (delay to destination), the airline has more to lose both in terms of money and brand value/loyalty.

Currently, there are two major approaches, the first one is a human centric approach and the second is a rule-based approach. In the human-centric approach, airlines have flight trackers who track flights and potentially delayed passengers. They estimate the arrival delay and hold the connecting flight. The tracker must look at the passenger itinerary, alternative route options, passenger profile, outbound flight (leg) status and incoming flight (physical aircraft of the same flight) delay in a very short span and make a judgment call based on their experience. Because the tracker has only an operational view, they tend to ignore the cost involved (monetary or the equivalent) in seat swaps/rebooking in other flights of the same airline or worse with other airlines.

Further, in the rule-based approach, airlines have a set of prefixed criteria to decide which flights can be held and for how long solely based on the buffers available at the airport and in the block time (time between the flight moves away from the departure gate and reaches the arrival gate). While this is a good start and the hold usually does not disrupt the network, however, it may not be the globally optimal solution nor provide the best passenger value.

Airlines have traditionally tried to run an efficient network where the airlines try to maintain On Time Performance (OTP) but if several connecting passengers are going to miss the connection the airline may have to compromise and hold flights. However, this compromise must make sense both in terms of passenger comfort and operational efficiency. The decision to make such holds have traditionally been made by a human expert with a limited view of the cause and impact. Given this state, most decisions may seem optimal but may end up disrupting the global operations.

SUMMARY OF THE INVENTION

Embodiments of the present disclosure provides technological improvements as solutions to one or more of the above-mentioned technical problems recognized by the inventors in conventional systems. For example, in one embodiment, a system and method to minimize passenger misconnects in airline operations is provided.

In one aspect, a processor-implemented method to minimize passenger misconnects in airline operations is provided. The method includes one or more steps as collecting a plurality of data of one or more incoming flights of an airline, passenger itinerary of each of one or more connecting passengers of the one or more incoming flights, and one or more related constraints. Further, the method comprises identifying one or more hold options of the at least one outbound flight based on one or more predefined constraints, computing a passenger disutility based on the delay to destination of the one or more passengers, availability of one or more alternate routes to each of the one or more connecting passengers, and a passenger specific connection time of each of the one or more connecting passengers, and computing an airline disutility based on the arrival delay of the at least one outbound flight and all the subsequent flights of the same physical aircraft, till the delay no-longer propagates and if available, an operating cost to the airline including, but not limited to, rebooking cost, ground cost, crew cost and penalty fees.

Further, the method includes calculating a total disutility based on the computed passenger disutility, the computed airline disutility, and one or more predefined business factors representing trade-offs between predefined key performance indicators (KPIs) of the operations (e.g., between delays incurred and passenger (PAX) missing connections) of the airline. Herein, the total disutility is calculated for each of the identified one or more hold options of the outbound flight. A hold option out of the identified one or more hold options is suggested based on the calculated total disutility. It is to be noted that the suggested hold option has least total disutility out of the identified one or more hold options of the outbound flight. The final hold option is selected in isolation, without considering the possibility of holds by other flights in the network.

In another embodiment, the system includes an input/output interface for collecting a plurality of data of one or more incoming flights of an airline, one or more hardware processors, and a memory in communication with the one or more hardware processors. The one or more hardware processors are configured to execute programmed instructions stored in the memory to analyze the collected plurality of data of each of the one or more incoming flights to identify one or more hold options of the at least one outbound flight of the airline based on one or more predefined constraints and to compute a passenger disutility based on the delay to destination of the one or more passengers, availability of one or more alternate routes to each of the one or more connecting passengers, and a passenger specific connection time of each of the one or more connecting passengers.

Further, the system is configured to compute an airline disutility based on the arrival delay of the at least one outbound flight and all the subsequent flights of the same physical aircraft; till the delay no-longer propagates and if available, an operating cost to the airline and to calculate a total disutility against each of the one or more hold options of the at least one outbound flight based on the computed passenger disutility, the computed airline disutility, and one or more predefined business factors representing trade-offs between KPIs of the operations (e.g., between delays incurred and passenger (PAX) missing connections) of the airline. Therefore, one hold option of the identified one or more hold options with least total disutility is recommended for the outbound flight.

In yet another embodiment, a non-transitory computer readable medium storing one or more instructions which when executed by a processor on a system cause the processor to perform a method is provided. The method includes one or more steps as collecting a plurality of data of one or more incoming flights of an airline, passenger itinerary of each of one or more connecting passengers of the one or more incoming flights, and one or more related constraints. Further, the method comprises identifying one or more hold options of the at least one outbound flight based on one or more predefined constraints, computing a passenger disutility based on the delay to destination of the one or more passengers, availability of one or more alternate routes to each of the one or more connecting passengers, and a passenger specific connection time of each of the one or more connecting passengers, and computing an airline disutility based on the arrival delay of the at least one outbound flight and all the subsequent flights of the same physical aircraft, till the delay no-longer propagates and if available, an operating cost to the airline including, but not limited to, rebooking cost, ground cost, crew cost and penalty fees.

Further, the method includes calculating a total disutility based on the computed passenger disutility, the computed airline disutility, and one or more predefined business factors representing trade-offs between predefined key performance indicators (KPIs) of the operations (e.g., between delays incurred and passenger (PAX) missing connections) of the airline. Herein, the total disutility is calculated for each of the identified one or more hold options of the outbound flight. A hold option out of the identified one or more hold options is suggested based on the calculated total disutility. It is to be noted that the suggested hold option has least total disutility out of the identified one or more hold options of the outbound flight. The final hold option is selected in isolation, without considering the possibility of holds by other flights in the network.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of a system for minimizing passenger misconnects in airline operations, in accordance with some embodiments of the present disclosure.
FIG. 2 illustrates a functional block diagram of a system for minimizing passenger misconnects in airline operations, in accordance with some embodiments of the present disclosure.
FIG. 3 is a functional flow diagram for minimizing passenger misconnects in airline operations, in accordance with some embodiments of the present disclosure.
FIG. 4 is a flow diagram to illustrate passenger disutility computation, in accordance with some embodiments of the present disclosure.
FIG. 5 is a schematic representation of factors contributing to variation in gate to gate connection time of passengers, in accordance with some embodiments of the present disclosure.
FIG. 6 is functional block diagram for predicting a Gate to Gate (G2G) score corresponding to the gate to gate connection time of the passengers, in accordance with some embodiments of the present disclosure.
FIG. 7 is a block diagram to illustrate airline disutility computation, in accordance with some embodiments of the present disclosure.

FIG. 8 is a graphical representation to illustrate one scenario of hold decision recommendation, in accordance with some embodiments of the present disclosure.

FIG. 9 is a graphical representation to illustrate another scenario of hold decision recommendation, in accordance with some embodiments of the present disclosure.

FIG. 10 illustrates a flow chart of a method for minimizing passenger misconnects in airline operations, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes, which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

The embodiments herein provide a method and a system for minimizing passenger misconnects in airline operations. It is to be noted that a passenger can miss a connecting flight due to several reasons, however, the most common reason is due to a delayed incoming flight. Moreover, the flights can be delayed due to various reasons outside the control of the airline, thus resulting in a delayed arrival. If some passengers on one such delayed flight were to have a tight connection (Time between arrival and departure is very limited), there is a high chance that they may miss the connection and so the airline may have to rebook them. This is an undesirable state for both the airline and the connecting passenger. While the passenger mostly has a time-based disutility (delay to destination), the airline has more to lose both in terms of money and brand value/loyalty.

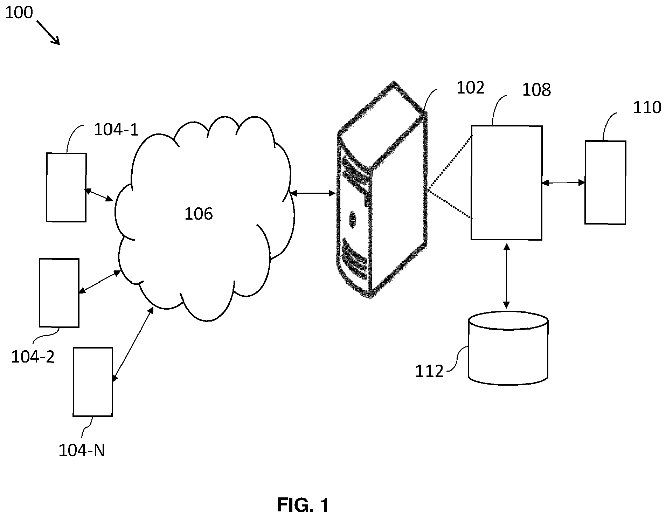

Referring now to the drawings, and more particularly to FIG. 1 through FIG. 10, where similar reference characters denote corresponding features consistently throughout the figures, there are shown preferred embodiments and these embodiments are described in the context of the following exemplary system and/or method.

FIG. 1 illustrates a block diagram of a system (100) minimizing passenger misconnects in airline operations, in accordance with an example embodiment. Although the present disclosure is explained considering that the system (100) is implemented on a server, it may be understood that the system (100) may comprises one or more computing devices (102), such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface (104). Examples of the I/O interface (104) may include, but are not limited to, a user interface, a portable computer, a personal digital assistant, a handheld device, a smartphone, a tablet computer, a workstation and the like. The I/O interface (104) are communicatively coupled to the system (100) through a network (106).

In an embodiment, the network (106) may be a wireless or a wired network, or a combination thereof. In an example, the network (106) can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network (106) may include a variety of network devices, including routers, bridges, servers, computing devices, storage devices. The network devices within the network (106) may interact with the system (100) through communication links.

The system (100) supports various connectivity options such as BLUETOOTH®, USB, ZigBee and other cellular services. The network environment enables connection of various components of the system (100) using any communication link including Internet, WAN, MAN, and so on. In an exemplary embodiment, the system (100) is implemented to operate as a stand-alone device. In another embodiment, the system (100) may be implemented to work as a loosely coupled device to a smart computing environment. The components and functionalities of the system (100) are described further in detail.

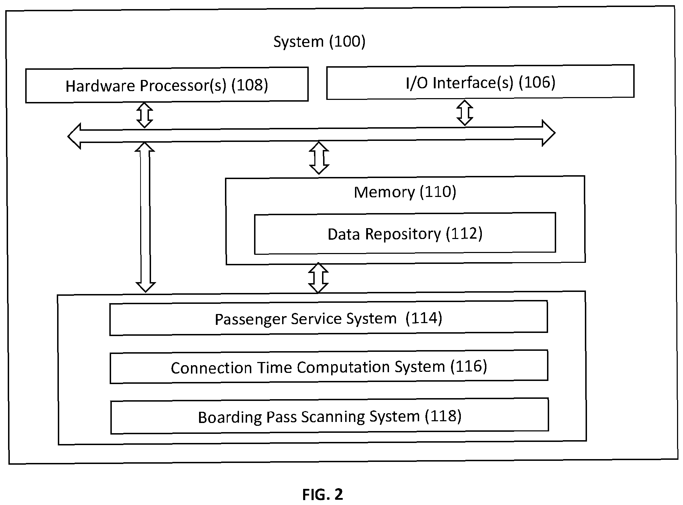

Referring FIG. 2, wherein the system (100) may be implemented in a workstation, a mainframe computer, a server, and a network server. In an embodiment, the computing device (102) further comprises one or more hardware processors (108), one or more memory (110), hereinafter referred as a memory (110) and a data repository (112), for example, a repository (112). The memory (110) is in communication with the one or more hardware processors (108), wherein the one or more hardware processors (108) are configured to execute programmed instructions stored in the memory (110), to perform various functions as explained in the later part of the disclosure. The repository (112) may store data processed, received, and generated by the system (100). Herein, the input/output interface (106) of the system (100) misconnects collects a plurality of data of one or more incoming flights of an airline, one or more details of one or more connecting passengers of the one or more incoming flights, and one or more details of one or more related constraints.

In the preferred embodiment of the disclosure, the system (100) is configured to analyze one or more details of each of the one or more connecting passengers to evaluate ability of the connecting passenger to make a connection from an arrival gate to an outbound departure gate.

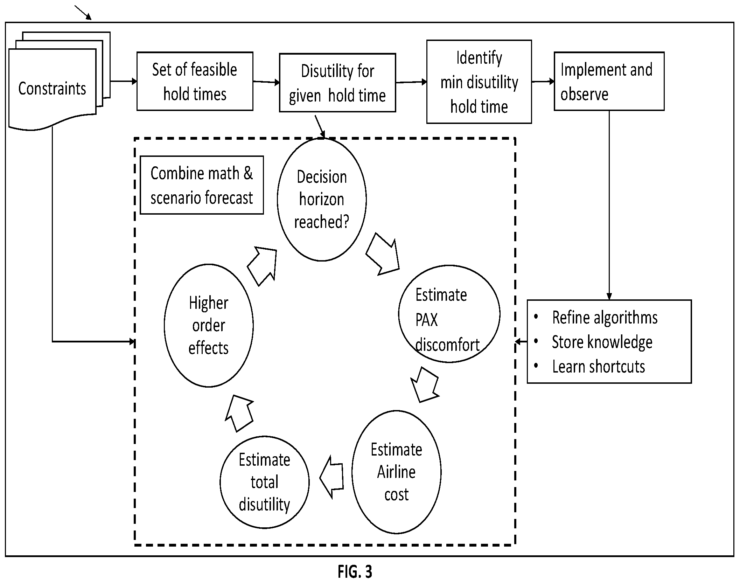

Referring FIG. 3 illustrating a functional block diagram for minimizing passenger misconnects in airline operations. Herein, the system (100) is configured to identify one or more hold options of at least one outbound flight of the airline based on one or more predefined constraints. It is to be noted that the one or more predefined constraints include operational constraint, and legal constraint. The operational constraint includes but not limited to curfew rules, ground staff, crew legality, curfew rules, penalties, and gate availability and the one or more legal constraints pertaining to laws/rules for labor (skilled or non-skilled) and delay penalties. The one or more constraints tend to limit a window of hold available and provide a set of feasible hold times.

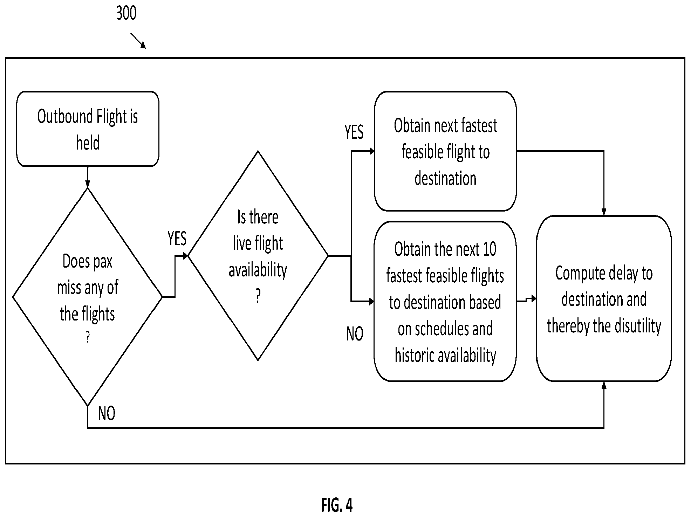

Referring FIG. 4, illustrating a flow diagram for passenger disutility computation. Wherein, the system (100) is configured to compute a passenger disutility based on the delay to destination of the one or more passengers, availability of one or more alternate routes to each of the one or more connecting passengers, and a passenger specific connection time of each of the one or more connecting passengers. It is to be noted that the one or more connecting passengers cannot be treated equally and the passenger's ability to make the connection may not just depend on the minimum connection time (MCT). Herein, the system (100) computes a Gate-to-Gate (G2G) score of each of the one or more connecting passengers and thereby a passenger specific connection time. The G2G score is computed utilizing machine learning models that are trained using historical passenger connectivity data, passenger profile (excluding Personally identifiable information [PII]), flight schedules and airport alerts.

It would be appreciated that a disutility, in general, means an adverse effect associated with a particular action. Herein, the passenger disutility is based on, but not limited to, the delay to destination experienced by each of one or more passengers due to a hold decision, class of travel, nature of travel, and loyalty of the passengers. The delay to disutility mapping can be linear or nonlinear with sharp jumps.

Further, the passenger disutility is calculated with respect to destination of each of the one or more connecting passengers. The passenger disutility, as shown in FIG. 4, is the sum of the disutility of all passengers flying on that flight. For those passengers who do not miss the current or further connections the disutility is simply the additional delay to the destination. For those who miss any of their connections the disutility is the delay to the destination of the revised itinerary as compared to the original itinerary. A hard constraint of maximum passenger delay of x hours is enforced (typically 24 hours).

$$P_{disutility} = \frac{T_i}{T_{max}}, T_{max} = x \ hours \qquad (1)$$

Where, value of $T_i$ depends on $w$, which indicates the number of connections based on the inbound *ETA of held flight and is determined by* ($ETD_{ot}$ - $ETA_{it}$ < MCT) of the held flight, where ETA is Expected Time of Arrival, ETD is Expected Time of Departure of the flight, and MCT is the Minimum Connection Time required by a passenger to make the connection. If $w=0$, then $T_i=T_{max}$
If w>0, then

$$T_i = \left(\sum_{w=1}^{\leq 10}\left(\prod_{j=1}^{w-1}(1-pj)\right)PwDw\right)/\sum Pw \qquad (2)$$

where $p_j$ is the probability of getting a seat on any of the other flights considered so far, *Pw* represents the probability of getting a seat in flight w and *Dw* represents the delay to the destination of flight w.

The challenging aspect of computing passenger disutility involves 2 major items 1) Alternate route availability and 2) Passenger's connection time.

**Alternate route availability:** If access to a passenger service system (PSS) (114) is readily available, then this problem of route availability does not exist, and a single service call yields the required information. But typically, this access is not available and so it is required to base the availability prediction on the flight schedules and historic availability. For this, the next 10 fastest routes to destination are taken and the historic availability of the routes is retrieved to represent the probability of getting a seat and the same are combined to arrive at a representational delay to the destination and thereby the disutility.

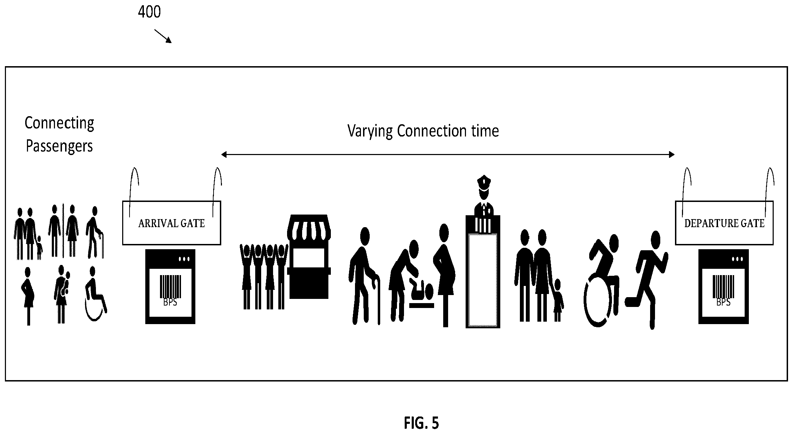

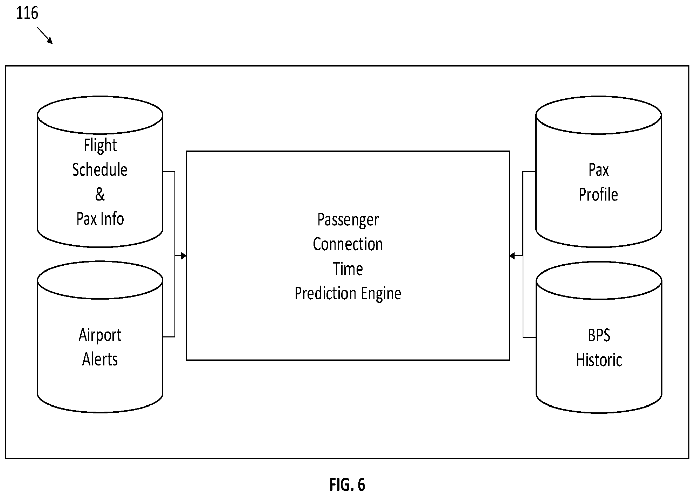

**Passenger's connection time:** FIG. 5 is a schematic representation of factors contributing to variation in gate to gate connection time of passengers and FIG. 6 is a functional block diagram for predicting a Gate to Gate (G2G) score corresponding to the gate to gate connection time of the passengers (116), in accordance with some embodiments of the present disclosure. FIG. 5 shows the transition of a passenger from the arrival gate to the outbound departure gate, along with visual representation of few passenger profiles. The difficult part here is to subjectively evaluate the passenger's ability to make the connection. This implicitly indicates that no two passengers can be treated equally and their ability to make the connection may not just depend on the MCT. To know this, required is to get an idea of a passenger's G2G (Gate to Gate) score.

It would be appreciated that the time taken by a connecting passenger to travel from the arrival gate to departure gate is known as passenger connection time (PCT). Ideally, the PCT should be considered while booking a connection for a passenger. But the PCT varies drastically from passenger to passenger and so it is common practice in the airline industry to use an airport specific average value knows as minimum connection time (MCT) as a metric for booking connections. While MCT works during regular scheduled operations, it goes for a toss when delays are introduced in the system.

In one example, where two passengers are traveling from New York to Frankfurt via Paris. Their flight from New York was scheduled to start at 04:30 GST and reach Paris at 12:00 GST. Their connecting flight to Frankfurt was scheduled at 13:50 GST and ultimately reach their destination by 15:20 GST. The MCT in the Paris airport is 90 minutes. Now imagine their flight from New York had departure late and so it arrived in Paris only at 12:30 GST. Now the connection time available to both is only 80 minutes, this may prompt the flight tracker to try and hold the Frankfurt flight or rebook them in the next flight. In either case the airline has a disutility. Further, consider the profile of the two passengers, one is a 72-year-old business class passenger (A) and the other is a 25-year-old economy class passenger (B). Herein, historic connection time data is collected and profile it based on passenger parameters then for the two-passenger profile represented by [Class, Age, Ethnicity] then their profile specific connection time is around 85 minutes and 70 minutes for A and B respectively. Therefore, passenger B will make the flight while passenger A may need to be rebooked.

Therefore, the G2G score is computed based on historic data from a Boarding Pass scanning system (BPS) (118) to identify passenger profile specific connection. The BPS system provides when the passenger had exited his arrival gate and when he reached the departure gate. Now this is a key metric from BPS system (118), this along with non-PII information about the passenger, flight schedules with gate info and airport alerts are utilized to compute the ability of the passenger to make the connection with the MCT serving as a guideline.

FIG. 6 shows the detailed technical architecture of how the method of the present disclosure uses the BPS system (118) and other relevant system to compute the G2G score. The G2G score is computed utilizing machine learning models that are trained using historical passenger connectivity data, passenger profile (excluding PII), flight schedules and airport alerts. The G2G score is computed using a combination of classification and regression techniques. Classification technique is used to classify passengers into a specific passenger profile and then identify the connection time based on regression models trained using labeled historical passenger connectivity data, passenger profile, flight schedules and airport alerts.

**Flight Schedule and passenger Information (Pax Info):** Here this block primarily enables BPS system (118) to know about the possible gate pairs for each departing flight and the list of all connecting passengers. Any last-minute gate changes or passenger cancellations can be obtained from here.

**Airport Alerts:** Airport alerts are basically used to understand the current state of the airport, any local disruption or potential speed ups can be used to better compute the G2G score.

**Pax Profile:** This block provides all non-PII passenger information that can be combined with the historical profiled BPS data to tune the passenger specific prediction.

**BPS Historic:** This block provides the historic BPS data and the passenger profile specific G2G score. These scores are updated every fortnight to keep pace with the changing landscape of the airport.

In the preferred embodiment of the disclosure, the system (100) is configured to compute an airline disutility based on the at least one outbound flight. The airline disutility is based on the arrival delay of the outbound flight and all the subsequent flights of the same physical aircraft, till the delay no-longer propagates and if available, an operating cost to the airline.

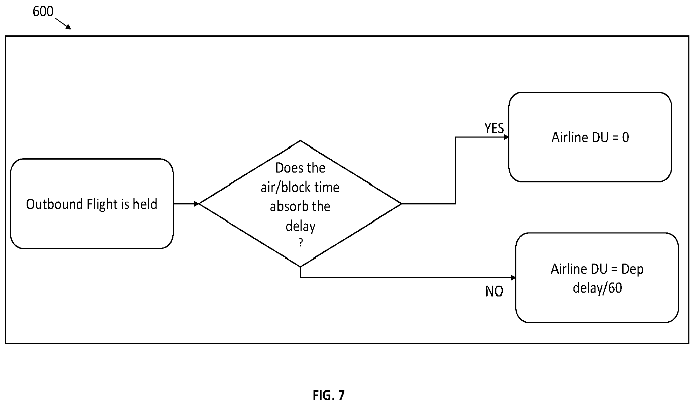

FIG. 7 is a block diagram (600) depicts steps for airline disutility computation in accordance with some embodiments of the present disclosure. The airline disutility is based on the arrival delay of the outbound flight and all the subsequent flights of the same physical aircraft; till the delay no-longer propagates and if available, an operating cost to the airline.

Airline disutility is computed as:

$$A_{disutility} = \sum_{w=1}^{L} \left( \frac{Tw}{A_{max}} \right), A_{max} = Y \text{ minutes} \qquad (3)$$

If rebooking cost, ground cost, crew cost, penalty fees are also available these can also be included. Rebooking cost is the cost incurred due to booking misconnecting passengers on an alternate itinerary, this cost may be just an opportunity cost or an actual expense. Ground cost includes the additional expense incurred due to gate delays which includes additional wage for ground staff, gate fees etc. Crew cost is the additional expense incurred when a crew shift has to be extended or a crew swap has to be made due to legal constraints as a result of a hold. Penalty fees include all fines that the airline has to pay due to violating any operational or legal constraints due to the hold.

Again, herein the system (100) makes use of the historic data from the aircraft's sensor network to estimate the non-hold delays that the flight typically incurs. This ensures that the system (100) avoids redundant holds and make use of the delay patterns. The onboard sensor systems of all incoming flights and incoming physical aircraft is used to estimate the arrival and departure times. The sensors are used to compute other delays in the network like departure ground delay, taxi-out delay, airtime delay, taxi-in delay, and arrival ground delay. Departure ground delay is the difference in the scheduled and the actual departure time of the flight from the gate. Departure delay could be due to late boarding of passenger or baggage, delayed ground checks, last minute maintenance, fueling, and crew or pilot related delays. Taxi-out delay is the difference in the scheduled and the actual time the flight took to move from the gate to the runway for take-off. Taxi out delays are generally cased due to runway congestion.

Airtime delay is the difference in the scheduled and the actual time the flight took to take-off from the departure airport and land at the arrival airport. Airtime delays are generally caused due to bad weather, unavailability or planned waypoints, equipment malfunction or congestion at the arrival corridor. Taxi-in delay is the difference in the scheduled and the actual time the flight took to reach the gate post landing at the arrival airport. Taxi in delays are generally cased due to delay in allocating gate and baggage counter. Finally, arrival ground delay is the difference in the scheduled and actual time it took to deboard the passenger and bags at the gate. Arrival delays are generally caused due to ground crew unavailability, issue in aero-bridge connectivity and technical issues.

Further, the system (100) is configured to calculate a total disutility against each of the one or more hold options of the at least one outbound flight based on the passenger disutility, the airline disutility, and one or more predefined business factors representing trade-offs between KPIs of the operations (e.g., between delays incurred and PAX missing connections) of the airline. Herein, the total disutility is a weighted sum of the passenger disutility and airline disutility. The total disutility has one or more local and global impacts. The one or more local impacts include an impact of hold option of the outgoing flight and the one or more passengers of the outbound flight. An example of the impact of a hold is as follows, 1) Consider the case where a hold of 15 mins if applied, to a flight *F* if the flight *F* is able to make up for the delay in the air it may still land on time at the destination airport therefor the hold has no impact but 2) Consider the case where the same 15 minute hold could not be absorbed in flight and the flight arrived 20 minutes late, this can cause passengers of this flight *F* connecting to other flights at the destination airport to miss their connections or those flights may have to hold and the flight may also delay the next flight of the same physical aircraft.

It is to be noted that while calculating the total disutility a ratio is applied for combining the passenger disutility and the airline disutility. The ratio can be a business lever to operate in the range between efficiency and empathy.

$$T_{disutility} = (\alpha * P_{disutility}) + ((1-\alpha) * A_{disutility}) \qquad (4)$$

wherein, $T_{disutility}$ is total disutility, $P_{disutility}$ is the passenger disutility, $A_{disutility}$ is the airline disutility; and $\alpha$ is used by business to adjust the impact of the airline and passenger disutility on the total disutility as deemed beneficial to the airline.

In another embodiment of the disclosure, wherein through a manual intervention, a feedback loop is used to observe one or more implications of the recommended hold option with least total disutility. Based on learning of the feedback loop, one or more instructions can be revised in the next iteration. The feedback includes an actual departure and arrival times of the concerned flights, actual passenger delay to destination, the BPS system reports on actual gate pair distances per passenger, other non-hold related break ups and business feedback.

In the preferred embodiment of the disclosure, the system (100) is configured to recommend one hold option with least total disutility of the identified one or more hold options of the outbound flight. The final hold option is selected in isolation, without considering the possibility of holds by other flights in the network.

In one example, wherein the hold options for an outbound flight are 0 minute, 10 minutes, 20 minutes, and 30 minutes. For each hold option the passenger disutility is 0.43,0.21,0.12 and 0.09 respectively and the airline disutility is 0,0.07,0.14 and 0.23, respectively. With an $\alpha$ of 0.7, the total disutility for each hold is 0.301,0.168,0.126 and 0.132, respectively. Hence the locally optimal hold is 20 minutes.

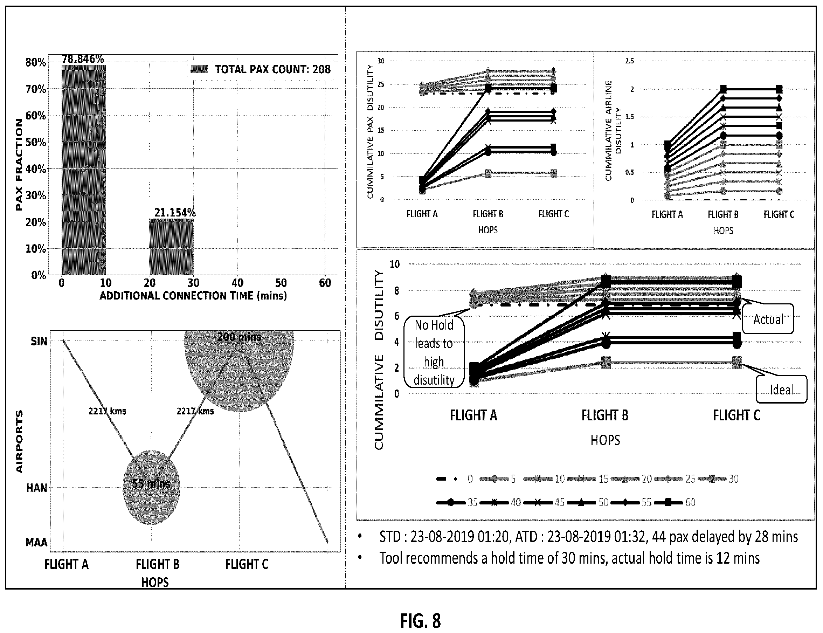

Referring FIG. 8, a graphical representation, wherein in one scenario around 44 passengers are delayed by about 28 minutes. The hold options range from 0 to 60 minutes in steps of 5. For each hold option the passenger disutility is 23.02, 23.99, 24.95, 25.92, 26.88, 27.85, 5.79, 10.42, 11.39, 17.13, 18.09, 19.06 and 24.21 respectively and the airline disutility is 0, 0.17, 0.33, 0.5, 0.67, 0.83, 1, 1.17, 1.33, 1.5, 1.67, 1.83 and 2.17 respectively. With an α of 0.7, the total disutility for each hold is 6.91, 7.31, 7.72, 8.13, 8.53, 8.94, 2.44, 3.94, 4.35, 6.19, 6.6, 7 and 8.66 respectively. Our method recommends a hold of 30 minutes as it has the least disutility, but the flight tracker seems to have been held the flight for 12 minutes.

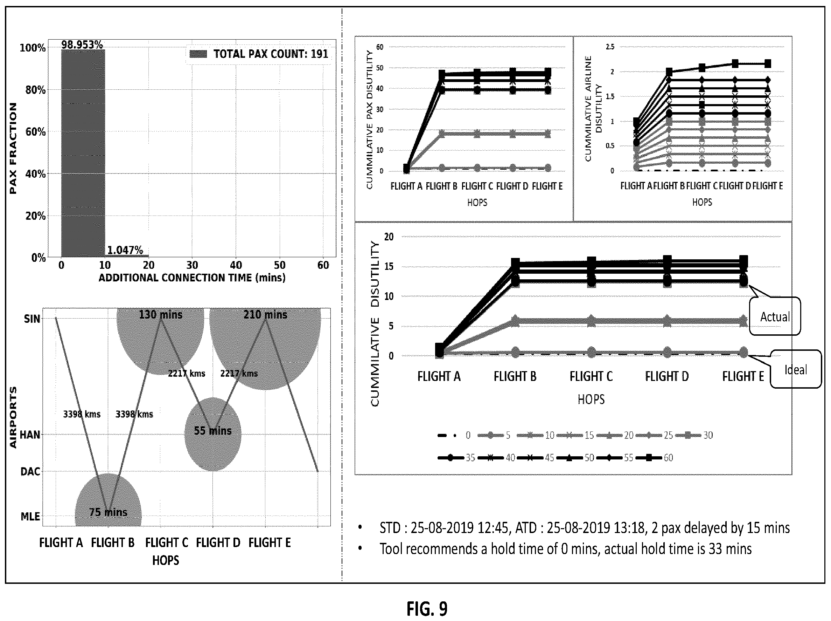

Referring FIG. 9, a graphical representation, wherein in another scenario around 2 passengers are delayed by 15 minutes. The hold options range from 0 to 60 in steps of 5. For each hold option the passenger disutility is 1.37 , 1.72, 18.25 ,17.73 ,18.08 ,18.43 ,39.09 ,39.45 ,43.66 ,44.01 ,46.44 ,46.79 and 48.04 respectively and the airline disutility is 0 ,0.17 ,0.33 ,0.5 ,0.67 ,0.83 ,1 ,1.17 ,1.33 ,1.5 ,1.67 ,1.83 and 2.17 respectively. With an α of 0.7, the total disutility for each hold is 0.41 ,0.63 ,5.71 ,5.67 ,5.89 ,6.11 ,12.43 ,12.65 ,14.03 ,14.25 ,15.1 ,15.32 and 15.93, respectively. Our method recommends not to hold the flight as that yields the least disutility, but the flight tracker seems to have been held the flight for 33 mins.

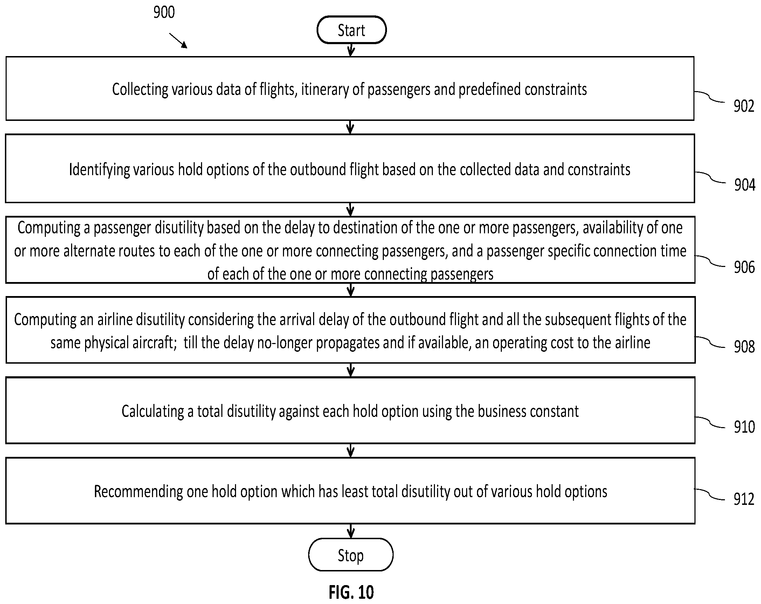

FIG. 10 illustrates a processor-implemented method (900) for minimizing passenger misconnects in airline operations. Wherein, information pertaining to flights, itinerary of passengers and predefined constraints are collected, a set of feasible holds are identified, a passenger disutility and an airline disutility is computed for each hold option, and are combined using the business factor to identify the hold with the least disutility and recommend the same for each outbound flight. The method comprises one or more steps as follows.

In the preferred embodiment, at the step (902) a plurality of data of one or more incoming flights of an airline, one or more details of one or more connecting passengers of the one or more incoming flights, and one or more details of one or more related constraints.

In the preferred embodiment, at the next step (904) identifying one or more hold options of the at least one outbound flight of the airline based on the data collected and one or more predefined constraints. The one or more predefined constraints include operational constraint, and legal constraint.

In the preferred embodiment, at the next step (906) computing a passenger disutility based on the delay to destination of the one or more passengers, availability of one or more alternate routes to each of the one or more connecting passengers, and a passenger specific connection time of each of the one or more connecting passengers.

In the preferred embodiment, at the next step (908) computing an airline disutility based on the at least one outbound flight. The airline disutility is based on the arrival delay of the outbound flight and all the subsequent flights of the same physical aircraft, till the delay no-longer propagates and if available, an operating cost to the airline.

In the preferred embodiment, at the next step (910) calculating a total disutility against each of the one or more hold options of the at least one outbound flight based on the computed passenger disutility, the computed airline disutility, and one or more predefined business factors representing trade-offs between KPIs of the operations (e.g., between delays incurred and PAX missing connections) of the airline. The total disutility is a weighted sum of the passenger disutility and airline disutility.

In the preferred embodiment, at the last step (912) recommending one hold option with least total disutility of the identified one or more hold options of the outbound flight. The final hold option is selected in isolation, without considering the possibility of holds by other flights in the network.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of passenger misconnection in an airline operation. The passenger can miss a connecting flight due to several reasons, but the most common reason is due to a delayed incoming flight. In such a scenario the passenger is merely a helpless victim who may have to accept the next best option provided by the airline. The embodiment thus provides the method and system for minimizing passenger misconnects in airline operations. Herein, the airline tracks potentially delayed passengers, identifies various feasible hold options, computes each hold's disutility, and recommends a hold option with the least disutility.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device, which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include each hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development would change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (900) comprising:

    collecting (902), via one or more hardware processors, a plurality of data of one or more flights of an airline, one or more details of one or more connecting passengers of the one or more incoming flights, and one or more predefined constraints;
    identifying (904), via the one or more hardware processors, one or more hold options of the at least one outbound flight of the airline based on the one or more predefined constraints, wherein the one or more predefined constraints include operational constraint, and legal constraint;
    computing (906), via the one or more hardware processors, a passenger disutility based on the delay to destination of one or more passengers, availability of one or more alternate routes to each of the one or more connecting passengers, and a passenger specific connection time of each of the one or more connecting passengers;
    computing (908), via the one or more hardware processors, an airline disutility based on the at least one outbound flight, wherein the airline disutility is based on the arrival delay of the outbound flight and all the subsequent flights of the same physical aircraft till the delay no-longer propagates and an operating cost to the airline;
    calculating (910), via the one or more hardware processors, a total disutility against each of the one or more hold options of the at least one outbound flight based on the computed passenger disutility, the computed airline disutility, and one or more predefined business factors representing trade-offs between predefined key performance indicators (KPIs) of the operations of the airline; and
    recommending (912), via the one or more hardware processors, one hold option with least total disutility of the identified one or more hold options of the outbound flight, wherein the one hold option is recommended in isolation, without considering possibility of holds by other outbound flights in network.

2. The processor-implemented method (900) of claim 1, further comprising:

computing, via one or more hardware processors, the passenger specific connection time for each of the one or more connecting passengers based on historic data of each of the one or more connecting passengers using a machine learning technique, wherein a classification technique is used to classify profile of each passenger and the connection time is computed based on a regression model.

3. The processor-implemented method (900) of claim 1, wherein the collected data of one or more connecting passengers are assessed based on one or more parameters, wherein the one or more parameters include travelling class, age, and loyalty of each of the one or more connecting passengers with the airline.

4. The processor-implemented method (900) of claim 1, wherein the total disutility has one or more impacts, wherein the one or more impacts include an impact of hold option of the outbound flight and the one or more passengers of the outbound flight.

5. The processor-implemented method (900) of claim 1, wherein the operating cost to the airline includes rebooking cost, ground cost, crew cost and penalty fees.

6. A system (100) comprising:

an input/output interface (104) for collecting a plurality of data of one or more flights of an airline, one or more details of one or more connecting passengers of the one or more incoming flights, and one or more details of one or more related constraints;
one or more hardware processors (108); and
a memory (110) in communication with the one or more hardware processors (108), wherein the one or more hardware processors (108) are configured to execute programmed instructions stored in the memory (110), to:

identify one or more hold options of the at least one outbound flight of the airline based on the one or more predefined constraints, wherein the one or more predefined constraints include operational constraint, and legal constraint;
compute a passenger disutility based on the delay to destination of one or more passengers, availability of one or more alternate routes to each of the one or more connecting passengers, and a passenger specific connection time of each of the one or more connecting passengers;
compute an airline disutility based on the at least one outbound flight, wherein the airline disutility is based on the arrival delay of the outbound flight and all the subsequent flights of the same physical aircraft till the delay no-longer propagates and an operating cost to the airline;
calculate a total disutility against each of the one or more hold options of the at least one outbound flight based on the computed passenger disutility, the computed airline disutility, and one or more predefined business factors representing trade-offs between predefined key performance indicators (KPIs) of the operations of the airline; and
recommend one hold option with least total disutility of the identified one or more hold options of the outbound flight, wherein the one hold option is recommended in isolation, without considering possibility of holds by other outbound flights in network.

7. A non-transitory computer readable medium storing one or more instructions which when executed by a processor on a system cause the processor to perform a method comprising:

collecting, via one or more hardware processors, a plurality of data of one or more flights of an airline, one or more details of one or more connecting passengers of the one or more incoming flights, and one or more predefined constraints;
identifying, via the one or more hardware processors, one or more hold options of the at least one outbound flight of the airline based on the one or more predefined constraints, wherein the one or more predefined constraints include operational constraint, and legal constraint;
computing, via the one or more hardware processors, a passenger disutility based on the delay to destination of one or more passengers, availability of one or more alternate routes to each of the one or more connecting passengers, and a passenger specific connection time of each of the one or more connecting passengers;
computing, via the one or more hardware processors, an airline disutility based on the at least one outbound flight, wherein the airline disutility is based on the arrival delay of the outbound flight and all the subsequent flights of the same physical aircraft till the delay no-longer propagates and an operating cost to the airline;
calculating, via the one or more hardware processors, a total disutility against each of the one or more hold options of the at least one outbound flight based on the computed passenger disutility, the computed airline disutility, and one or more predefined business factors representing trade-offs between predefined key performance indicators (KPIs) of the operations of the airline; and

recommending, via the one or more hardware processors, one hold option with least total disutility of the identified one or more hold options of the outbound flight, wherein the one hold option is recommended in isolation, without considering possibility of holds by other outbound flights in network.

100

104-1

104-2

104-N

106

102 108

110

112

**FIG. 1**

System (100)

Hardware Processor(s) (108)    I/O Interface(s) (106)

Memory (110)

Data Repository (112)

Passenger Service System  (114)

Connection Time Computation System (116)

Boarding Pass Scanning System (118)

**FIG. 2**

FIG. 3

300

Outbound Flight is held

Does pax miss any of the flights ?

YES

Is there live flight availability ?

YES

Obtain next fastest feasible flight to destination

NO

Obtain the next 10 fastest feasible flights to destination based on schedules and historic availability

Compute delay to destination and thereby the disutility

NO

FIG. 4

400

Connecting Passengers

Varying Connection time

ARRIVAL GATE

BPS

DEPARTURE GATE

BPS

FIG. 5

**FIG. 6**

600

Outbound Flight is held

Does the air/block time absorb the delay?

YES

Airline DU = 0

NO

Airline DU = Dep delay/60

**FIG. 7**

FIG. 8

EP 3 929 835 A1

FIG. 9

EP 3 929 835 A1

EP 3 929 835 A1

900

Start

Collecting various data of flights, itinerary of passengers and predefined constraints ⎯ 902

Identifying various hold options of the outbound flight based on the collected data and constraints ⎯ 904

Computing a passenger disutility based on the delay to destination of the one or more passengers, availability of one or more alternate routes to each of the one or more connecting passengers, and a passenger specific connection time of each of the one or more connecting passengers ⎯ 906

Computing an airline disutility considering the arrival delay of the outbound flight and all the subsequent flights of the same physical aircraft; till the delay no-longer propagates and if available, an operating cost to the airline ⎯ 908

Calculating a total disutility against each hold option using the business constant ⎯ 910

Recommending one hold option which has least total disutility out of various hold options ⎯ 912

Stop

FIG. 10

Europäisches
Patentamt

European
Patent Office

Office européen
des brevets

# EUROPEAN SEARCH REPORT

Application Number

EP 21 15 2858

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KANAI SATOSHI ET AL: "An optimal delay management algorithm from passengers' viewpoints considering the whole railway network", JOURNAL OF RAIL TRANSPORT PLANNING & MANAGEMENT, [Online] vol. 1, no. 1, 1 November 2011 (2011-11-01), pages 25-37, XP055793365, ISSN: 2210-9706, DOI: 10.1016/j.jrtpm.2011.09.003 Retrieved from the Internet: URL:http://dx.doi.org/10.1016/j.jrtpm.2011.09.003> [retrieved on 2021-04-14] * abstract * ----- | 1-7 | INV. G06Q10/06 G06Q50/30 |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 15 April 2021 | Liendl, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

**EP 3 929 835 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202021026748